# EUROPÄISCHE PATENTSCHRIFT

(11) **EP 0 626 787 B1**
(45) Veröffentlichungstag und Bekanntmachung des Hinweises auf die Patenterteilung: **04.08.1999**
(21) Anmeldenummer: 94201410.1
(22) Anmeldetag: 18.05.1994
(51) Int. Cl.: H04N 5/76, H04N 5/78, H04N 5/775

(54) **Videorekorder**
Videorecorder
Magnétoscope

(30) Priorität: 26.05.1993 AT 103093
(43) Veröffentlichungstag der Anmeldung: 30.11.1994
(73) Patentinhaber: Koninklijke Philips Electronics N.V., 5621 BA Eindhoven (NL)
(72) Erfinder: Leshen, Pawel, NL-5656 AA Eindhoven (NL)
(74) Vertreter: van der Kruk, Willem Leonardus

(56) Entgegenhaltungen:
- EP-A- 0 507 433
- US-A- 4 267 563
- US-A- 4 272 784

## Beschreibung

Die Erfindung bezieht sich auf einen Videorecorder mit einem Tuner, der auf jeweils einen Sender aus einer Mehrzahl von Sendern abstimmbar ist und der nach einer Abstimmung auf einen Sender ein empfangenes Fernsehprogrammsignal abgibt, mit einer Aufzeichnungs- und Wiedergabe-Einrichtung zum Aufzeichnen eines vom Tuner abgegebenen empfangenen Fernsehprogrammsignales und zum Wiedergeben eines aufgezeichneten Fernsehprogrammsignales, und mit einer Anschlußeinrichtung, die mit dem Tuner verbindbar ist, um ihr das vom Tuner abgegebene empfangene Fernsehprogrammsignal zuzuführen, und an die eine Kabelverbindung anschließbar ist, die an eine Anschlußeinrichtung eines Fernsehempfängers anschließbar ist, der ebenfalls einen Tuner aufweist, der auf jeweils einen Sender aus einer Mehrzahl von Sendern abstimmbar ist und der nach einer Abstimmung auf einen Sender ein empfangenes Fernsehprogrammsignal abgibt, das in einer ersten Wiedergabe-Betriebsart des Fernsehempfängers mit demselben wiedergegeben wird, wobei über die Kabelverbindung Signale von dem Videorecorder weg und zu dem Videorecorder hin übertragbar sind, und mit einer Betriebsarten-Einschalteinrichtung, mit der im Videorecorder eine Betriebsart "Aufzeichnen", in der das Aufzeichnen eines vom Tuner abgegebenen empfangenen Fernsehprogrammsignales erfolgt, und eine Betriebsart "Wiedergeben", in der das Wiedergeben eines aufgezeichneten Fernsehprogrammsignales erfolgt, und weitere Betriebsarten einschaltbar sind, und mit einer Steuersignal-Erzeugungseinrichtung, die bei im Videorecorder eingeschalteter Betriebsart "Wiedergeben" ein Wiedergabe-Steuersignal erzeugt und abgibt, das zugleich mit einem in der Betriebsart "Wiedergeben" im Videorecorder wiedergegebenen Fernsehprogrammsignal der Anschlußeinrichtung des Videorecorders zuführbar ist, von der das Wiedergabe-Steuersignal über die Kabelverbindung und die Anschlußeinrichtung des Fernsehempfängers einer Detektionseinrichtung des Fernsehempfängers zuführbar ist, mit der das Wiedergabe-Steuersignal detektierbar ist, wobei bei Feststellen des Wiedergabe-Steuersignales im Fernsehempfänger eine zweite Wiedergabe-Betriebsart zum Wiedergeben des über die Kabelverbindung zum Fernsehempfänger übertragen Fernsehprogrammsignales einschaltbar ist.

Ein solcher Videorecorder ist in einer Vielzahl von Ausführungsvarianten allgemein bekannt. Beispielsweise wurde ein solcher von der Anmelderin hergestellter Videorecorder unter der Typennummer VR 813 in den Handel gebracht. Mit einem solchen Videorecorder ist ein aus einem Fernsehempfänger und diesem Videorecorder bestehendes Videosystem konfigurierbar, wobei der Fernsehempfänger und der Videorecorder baulich getrennt, aber auch zu einer Baueinheit kombiniert sein können. Bei einem solchen Videosystem sind der Tuner des Fernsehempfängers und der Tuner des Videorecorders sehr häufig auf unterschiedliche Sender abgestimmt, von denen unterschiedliche Fernsehprogramme, also unterschiedliche Fernsehprogrammsignale, ausgesendet werden, so daß in der häufiger ausgenützten ersten Wiedergabe-Betriebsart des Fernsehempfängers die zum Wiedergeben des vom Tuner des Fernsehempfängers abgegebenen Fernsehprogrammsignales am Bildschirm des Fernsehempfängers vorgesehen ist, das vom Tuner des Fernsehempfängers abgegebene Fernsehprogrammsignal am Bildschirm desselben wiedergegeben wird, wobei zugleich mit dem Videorecorder das vom Tuner des Videorecorders abgegebene Fernsehprogrammsignal aufgezeichnet werden kann, wenn im Videorecorder die Betriebsart "Aufzeichnen" eingeschaltet wird. Hierbei besteht das Problem, daß beim Einschalten der Betriebsart "Aufzeichnen" im Videorecorder ohne vorheriger Prüfung, ob der Tuner des Videorecorders tatsächlich auf das vom Benützer für eine Aufzeichnung gewünschte Fernsehprogramm abgestimmt ist und daher das gewünschte Fernsehprogrammsignal abgibt, der Fall eintreten kann, daß der Tuner des Videorecorders auf ein anderes als das gewünschte Fernsehprogramm abgestimmt ist, so daß dann das vom Benützer gar nicht gewünschte Fernsehprogrammsignal aufgezeichnet wird. Um eine solche Prüfung aber vornehmen zu können, muß im Zusammenhang mit dem bekannten Videorecorder eine umständliche Manipulation vorgenommen werden, was unerwünscht und nachteilig ist. Es muß beispielsweise der Tuner des Fernsehempfängers zuerst auf denselben Sender abgestimmt werden, auf den auch der Tuner des Videorecorders abgestimmt ist, wonach dann am Bildschirm des Fernsehempfängers das empfangene Fernsehprogramm visuell überprüft werden kann. Weiters besteht oftmals der Wunsch eines Benützers, während des Aufzeichnens eines einem Fernsehprogramm entsprechenden Fernsehprogrammsignales und des gleichzeitigen Betrachtens eines anderen Fernsehprogrammes am Bildschirm eines Fernsehempfängers eine Überprüfung vornehmen zu können, ob noch das dem gewünschten Fernsehprogramm entsprechende Fernsehprogrammsignal mit dem Videorecorder aufgezeichnet wird oder ob - aus welchen Gründen immer - das gewünschte Fernsehprogramm bereits zu Ende gegangen ist oder unterbrochen wurde und dergleichen. Auch hierfür ist im Zusammenhang mit dem bekannten Videorecorder eine umständliche Manipulation erforderlich, was unerwünscht und nachteilig ist. Weiters besteht auch beispielsweise bei in eine sogenannte Stand-by-Betriebsart geschaltetem Videorecorder oftmals der Wunsch eines Benützers auf einfache Weise überprüfen zu können, auf welchen Sender der Tuner des Videorecorders abgestimmt ist. Auch hierfür ist im Zusammenhang mit dem bekannten Videorecorder eine komplizierte Manipulation erforderlich, was unerwünscht und nachteilig ist.

Die Erfindung hat sich zur Aufgabe gestellt, die vorstehend angeführten Schwierigkeiten zu vermeiden und bei einem Videorecorder der eingangs im ersten Absatz angeführten Gattung auf einfache Weise und mit minimalem Aufwand die Möglichkeit zu schaffen, den Abstimmzustand des Tuners des Videorecorders prüfen zu können, also prüfen zu können, auf welchen Sender der Tuner des Videorecorders abgestimmt ist und welches Fernsehprogrammsignal dieser Tuner daher abgibt. Hierfür ist die Erfindung dadurch gekennzeichnet, daß der Videorecorder eine Zeitfenster-Erzeugungseinrichtung zum Erzeugen eines Zeitfensters mit einer vorgegebenen Zeitfensterlänge aufweist und daß die Betriebsarten-Einschalteinrichtung die Zeitfenster-Erzeugungseinrichtung steuert, so daß die Zeitfenster-Erzeugungseinrichtung infolge des Auslösens des Einschaltens mindestens einer mit der Betriebsarten-Einschalteinrichtung einschaltbaren, von der Betriebsart "Wiedergeben" abweichenden vorgegebenen Betriebsart das Zeitfenster mit der vorgegebenen Zeitfensterlänge selbsttätig mindestens einmal erzeugt, und daß die Zeitfenster-Erzeugungseinrichtung die Steuersignal-Erzeugungseinrichtung steuert, so daß die Steuersignal-Erzeugungseinrichtung das Wiedergabe-Steuersignal auch dann erzeugt und abgibt, wenn die Zeitfenster-Erzeugungseinrichtung das Zeitfenster erzeugt.

Hierdurch ist auf besonders einfache Weise erreicht, daß lediglich durch das Auslösen des Einschaltens einer vorgegebenen Betriebsart für eine vorgegebene Zeitspanne, nämlich der Zeitfensterlänge des Zeitfensters, das Wiedergabe-Steuersignal, das mittels der Steuersignal-Erzeugungseinrichtung des Videorecorders während der vorgegebenen Zeitspanne erzeugt wird, an den Fernsehempfänger abgegeben wird, so daß der Fernsehempfänger in seine zweite Wiedergabe-Betriebsart geschaltet wird und folglich das vom Tuner des Videorecorders abgegebene und über die Anschlußeinrichtung des Videorecorders sowie die Kabelverbindung und die Anschlußeinrichtung des Fernsehempfängers zum Fernsehempfänger übertragene Fernsehprogrammsignal zum Teil auf dem Bildschirm und zum Teil mit einem Lautsprecher des Fernsehempfängers wiedergebeben wird und daher eine visuelle und akustische Überprüfung dieses Fernsehprogrammsignales möglich ist.

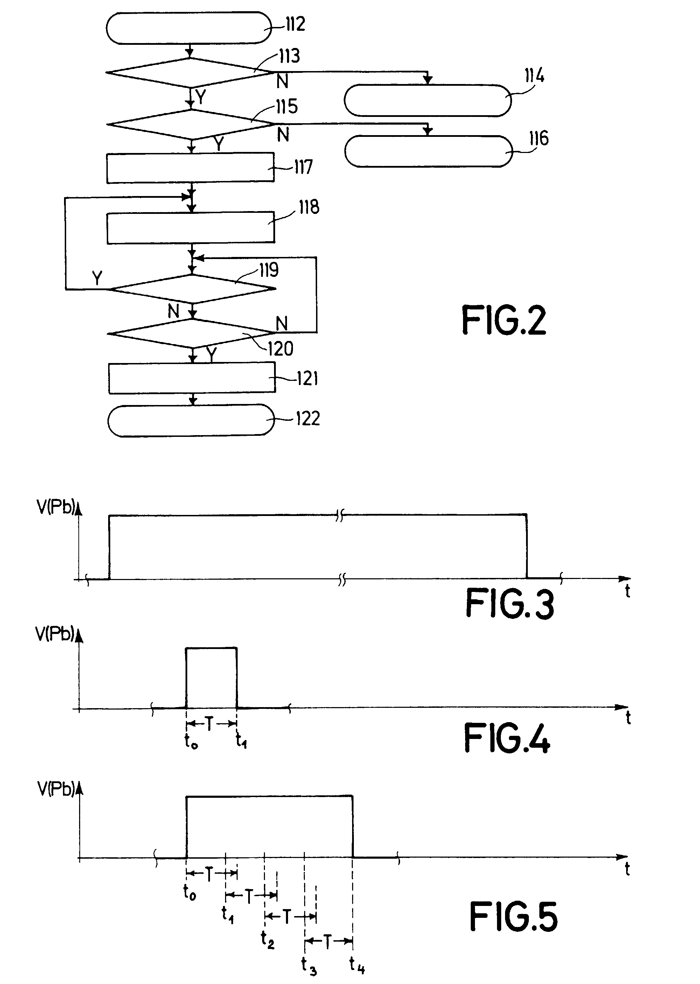

Es kann hier noch erwähnt werden, daß ein Videorecorder entsprechend der eingangs im ersten Absatz angeführten Gattung aus dem Patentdokument US 4 267 563 A bekannt ist, bei dem wie bei einem erfindungsgemäßen Videorecorder in einer von der Betriebsart ,,Wiedergeben" abweichenden Betriebsart, nämlich in der Betriebsart "Aufzeichnen", das aufgezeichnete Fernsehsignal auf dem Bildschirm des an den Videorecorder angeschlossenen Fernsehgeräts wiedergebbar ist, auch wenn dieses Fersehgerät ursprünglich auf ein anderes Fernsehprogramm abgestimmt war. Allerdings erfolgt hier das Wiedergeben des aufgezeichneten Fernsehprogramms nicht wie bei einem erfindungsgemäßen Videorecorder automatisch durch die Erzeugung eines Zeitfensters, sondern durch manuelles Drücken eines entsprechenden Abstimmknopfes, mit dem das Fernsehgerät auf den Videorecorder schaltbar ist. Will man dann erneut das vorher gesehene Fernsehprogramm einschalten, muß manuell erneut ein entsprechender Abstimmknopf gedrückt werden, wie dies aus der Figur 2 und insbesondere aus der Beschreibung in Spalte 14, Zeilen 20 bis 31 und Zeilen 54 bis 62 des Patentdokuments US 4 267 563 A zu entnehmen ist.

Eine ähnliche manuell betätigbare Abstimmsteuerung für einen Videorecorder ist in dem Patentdokument US 4 272 784 A offenbart, von dem hierzu insbesondere auf die Figur 2 und auf die Beschreibung in Spalte 6, Zeilen 12 bis 44 zu verweisen ist.

Was den Erfindungsgegenstand anbelangt, so kann beispielsweise das Erzeugen des Zeitfensters beim Auslösen des Einschaltens der Betriebsart "Stop" im Videorecorder, also durch Betätigen einer Stop-Taste am Videorecorder oder an einer Fernbedienungseinrichtung für den Videorecorder, erfolgen.

Als vorteilhaft hat sich erwiesen, wenn die Betriebsarten-Einschalteinrichtung infolge des Auslösens des Einschaltens der Betriebsart "Aufzeichnen" die Zeitfenster-Erzeugungseinrichtung zum Erzeugen des Zeitfensters ansteuert. Dies ist deshalb von Vorteil, weil insbesondere beim Einschalten der Betriebsart "Aufzeichnen" ein kurzzeitiges Überprüfen des vom Tuner des Videorecorders abgegebenen Fernsehprogrammsignales und folglich des zum Aufzeichnen zur Verfügung stehenden Fernsehprogrammsignales zweckmäßig und erwünscht ist.

Als besonders vorteilhaft hat sich erwiesen, wenn eine Detektionseinrichtung vorgesehen ist, mit der das mittels der Betriebsarten-Einschalteinrichtung durchgeführte Auslösen eines Abstimmens des Tuners des Videorecorders auf einen anderen Sender innerhalb der vorgegebenen Zeitfensterlänge des infolge des Auslösens des Einschaltens der mindestens einen vorgegebenen Betriebsart von der Zeitfenster-Erzeugungseinrichtung erzeugten Zeitfensters feststellbar ist, und diese Detektionseinrichtung die Zeitfenster-Erzeugungseinrichtung so steuert, daß die Zeitfenster-Erzeugungseinrichtung zu dem Zeitpunkt des Feststellens des Auslösens eines Abstimmens des Tuners des Videorecorders auf einen anderen Sender rückgesetzt wird und das Zeitfenster mit der vorgegebenen Zeitfensterlänge erneut erzeugt.

Dies ist deshalb vorteilhaft, weil hierdurch bei einem nach dem Auslösen des Einschaltens der vorgegebenen Betriebsart - vorzugsweise der Betriebsart "Aufzeichnen" - erfolgenden Feststellen, daß der Tuner des Videorecorders leider nicht auf einen gewünschten Sender abgestimmt ist, und einem nachfolgend ausgelösten Abstimmen des Tuners auf einen anderen Sender, was solange erfolgt, bis der gewünschte Sender gefunden ist, nach jedem Auslösen eines neuerlichen Abstimmvorganges der Fernsehempfänger in seine zweite Wiedergabe-Betriebsart für die Dauer des Zeitfensters geschaltet wird und daher ein visuelles und akustisches Überprüfen der während eines Abstimmvorganges abgegebenen Fernsehprogrammsignale möglich ist.

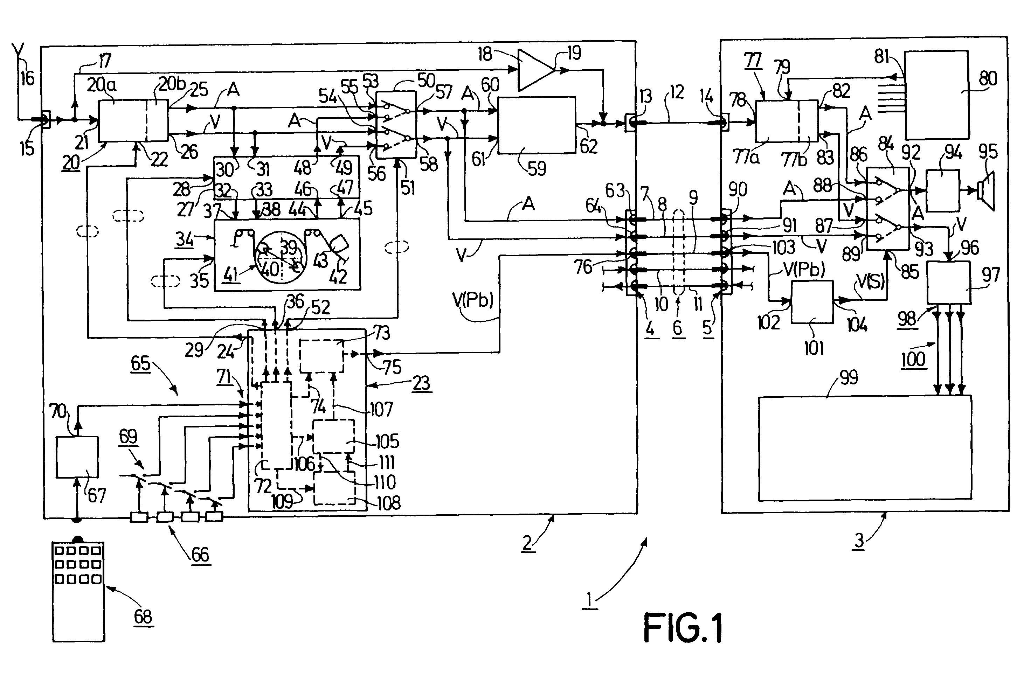

Die Erfindung wird im folgenden anhand von drei in den Zeichnungen dargestellten Ausführungsbeispielen näher beschrieben, auf die die Erfindung jedoch nicht beschränkt sein soll. Die Fig. 1 zeigt schematisch ein Videosystem, das aus einem Videorecorder gemäß einem ersten Ausführungsbeispiel der Erfindung und aus einem mit dem Videorecorder über eine mehradrige Kabelverbindung verbundenen Fernsehempfänger besteht, wobei der Videorecorder eine mit Hilfe eines Mikrocomputers realisierte Steuersignal-Erzeugungseinrichtung zum Erzeugen eines Wiedergabe-Steuersignales und der Fernsehempfänger eine Detektionseinrichtung zum Detektieren des Wiedergabe-Steuersignales aufweist.

Die Fig. 2 zeigt ein Flußdiagramm eines Programmablaufes, der in dem Mikrocomputer des Videorecorders des Videosystems gemäß Fig. 1 abgearbeitet wird, um ein Wiedergabe-Steuersignal zu erzeugen.

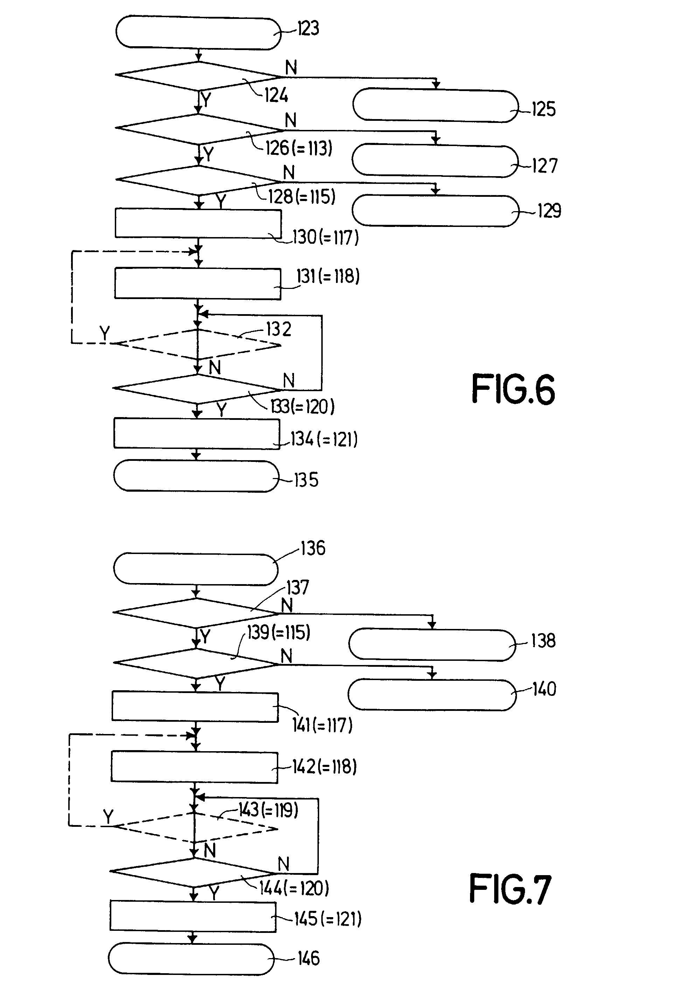

Die Fig. 3 zeigt den Verlauf eines Wiedergabe-Steuersignales, das von der Steuersignal-Erzeugungseinrichtung abgegeben wird, wenn im Videorecorder des Videosystems gemäß Fig. 1 die Betriebsart "Wiedergeben" eingeschaltet ist. Die Fig. 4 zeigt den Verlauf eines Wiedergabe-Steuersignales, das von der Steuersignal-Erzeugungseinrichtung des Videorecorders des Videosystems gemäß Fig. 1 abgegeben wird, wenn die Steuersignal-Erzeugungseinrichtung von einer ebenfalls mit dem Mikrocomputer realisierten Zeitfenster-Erzeugungseinrichtung zur Erzeugung eines Zeitfensters mit einer vorgegebenen Zeitfensterlänge gesteuert wird. Die Fig. 5 zeigt den Verlauf eines Wiedergabe-Steuersignales, das von der Steuersignal-Erzeugungseinrichtung des Videorecorders des Videosystems gemäß Fig. 1 abgegeben wird, wenn die Steuersignal-Erzeugungseinrichtung von der Zeitfenster-Erzeugungseinrichtung gesteuert wird und wenn innerhalb der Zeitfensterlänge des von der Zeitfenster-Erzeugungseinrichtung erzeugten Zeitfensters, dreimal hintereinander ein Abstimmvorgang zum Abstimmen eines Tuners des Videorecorders auf einen anderen Sender ausgelöst wird. Die Fig. 6 zeigt ein Flußdiagramm eines Programmablaufes, der in einem Microcomputer eines Videorecorders gemäß einem zweiten Ausführungsbeispiel der Erfindung abgearbeitet wird, um ein Wiedergabe-Steuersignal zu erzeugen. Die Fig. 7 zeigt ein Flußdiagramm eines Programmablaufes, der in einem Mikrocomputer eines Videorecorders gemäß einem dritten Ausführungsbeispiel der Erfindung abgearbeitet wird, um ein Wiedergabe-Steuersignal zu erzeugen.

In Fig. 1 ist ein Videosystem 1 dargestellt, das aus einem Videorecorder 2 gemäß einem ersten Ausführungsbeispiel der Erfindung und aus einem Fernsehempfänger 3 besteht. Der Videorecorder 2 und der Fernsehempfänger 3 sind mit je einer Anschlußeinrichtung 4 bzw. 5 versehen, die üblicherweise als Scart-Buchse bzw. Euro-Connector bezeichnet werden. An jede der beiden Anschlußeinrichtungen 4 und 5 ist eine mehradrige Kabelverbindung 6 angeschlosen, von der in Fig. 1 fünf Adern bzw. leitungen 7, 8, 9, 10 und 11 dargestellt sind. Die Kabelverbindung 6 dient zur Signalübertragung zwischen dem Videorecorder 2 und dem Fernsehempfänger 3, wobei mit dem Videorecorder 2 empfangene, demodulierte und aufzuzeichnende bzw. wiedergegebene Tonsignale A über die Leitung 7 und mit dem Videorecorder 2 empfangene, demodulierte und aufzuzeichnende bzw. wiedergegebene Bildsignale V über die Leitung 8 vom Videorecorder 2 zum Fernsehempfänger 3 übertragbar sind. Über die Leitung 9 ist ein Wiedergabe-Steuersignal V(Pb), das im Videorecorder 2 erzeugbar ist, worauf nachfolgend noch näher eingegangen ist, zum Fernsehempfänger 3 übertragbar, in dem das übertragene Wiedergabe-Steuersignal V(Pb) mittels einer Detektionseinrichtung detektierbar ist, worauf nachfolgend auch noch näher eingegangen ist. Über die Leitung 10 ist ein weiteres Signal vom Videorecorder 2 zum Fernsehempfänger 3 und über die Leitung 11 ist ein weiteres Signal vom Fernsehempfänger 3 zum Videorecorder 2 übertragbar.

Zwischen dem Videorecorder 2 und dem Fernsehempfänger 3 ist noch eine weitere Verbindungsleitung 12 vorgesehen, die zum Übertragen von undemodulierten Fernsehprogrammsignalen vom Videorecorder 2 zum Fernsehempfänger 3 ausgebildet und vorgesehen ist und die einerseits mit einer Anschlußbuchse 13 des Videorecorders 2 und andererseits mit einer Anschlußbuchse 14 des Fernsehempfängers 3 verbunden ist.

Der Videorecorder 2 weist eine weitere Anschlußbuchse 15 auf, an die entweder eine wie in Fig. 1 schematisch dargestellte Empfangsantenne 16 oder eine in Fig. 1 nicht dargestellte Satelliten-Fernsehsignal-Empfangseinrichtung oder auch eine Kabel-Fernsehsignal-Empfangseinrichtung anschließbar ist. Mit der Anschlußbuchse 15 ist über eine sogenannte Durchschleifleitung 17 ein Breitbandverstärker 18 zum Verstärken der empfangenen und undemodulierten Fernsehsignale verbunden. Der Ausgang 19 des Verstärkers 18 ist mit der Anschlußbuchse 13 verbunden.

Der Videorecorder 2 weist eine üblicherweise als Frontend bezeichnete Schaltungsausbildung 20 auf, die einen elektronisch abstimmbaren Tuner 20a, dessen Fernsehsignaleingang 21 mit der Anschlußbuchse 15 verbunden ist, und einen dem Tuner 20a nachgeschalteten Zwischenfrequenzteil 20b aufweist. Das Fronted 20 weist weiters einen Steuereingang 22 zum Steuern des Tuners 20a auf, dem von einem Mikrocomputer 23 des Videorecorders 2 erzeugbare und an einem Ausgang 24 desselben abgegebene Steuersignale zuführbar sind. Mit einem dieser Steuersignale wird beispielsweise ein aufeinanderfolgendes Abstimmen des Tuners 20a auf verschiedene Sender ausgelöst, und ein anderes dieser Steuersignale bewirkt ein Festhalten des Tuners 20a auf einen zuvor abgestimmten Sender. Das Frontend 20 bzw. dessen Zwischenfrequenzteil 20b weist einen ersten Ausgang 25 und einen zweiten Ausgang 26 auf. Der Tuner 20a des Frontends 20 ist auf jeweils einen Sender aus einer Mehrzahl von Sendern abstimmbar, und nach einer Abstimmung auf einen Sender gibt der Zwischenfrequenzteil 20b des Frontends 20 ein empfangenes Fernsehprogrammsignal ab. Hierbei gibt das Frontend 20 an seinem ersten Ausgang 25 jeweils die demodulierten Tonsignale A und an seinem zweiten Ausgang 26 jeweils die demodulierten Bildsignale V ab.

Der Videorecorder 2 weist eine Signalverarbeitungseinrichtung 27 auf, die zwischen einem Aufzeichnungs-Betriebszustand und einem Wiedergabe-Betriebszustand umschaltbar ist. Zum Umschalten weist die Signalverarbeitungseinrichtung 27 einen Steuereingang 28 auf, dem von dem Mikrocomputer 23 erzeugbare und an einem Ausgang 29 abgegebene Steuersignale zuführbar sind. Weiters weist die Signalverarbeitungseinrichtung 27 zwei Signaleingänge 30 und 31 auf, die mit den Ausgängen 25 und 26 des Frontends 20 verbunden sind und denen die vom Frontend 20 abgegebenen Tonsignale A und Bildsignale V zur Verarbeitung zuführbar sind, um dieselben aufzeichnen zu können. Die verarbeiteten Tonsignale A und Bildsignale V gibt die Signalverarbeitungseinrichtung 27 an zwei Ausgängen 32 und 33 ab.

Von den Ausgängen 32 und 33 der Signalverarbeitungseinrichtung 27 werden die verarbeiteten Tonsignale A und Bildsignale V einer Aufzeichnungs- und Wiedergabe-Einrichtung 34 zugeführt. Die Einrichtung 34 ist ebenfalls zwischen einem Aufzeichnungs-Betriebszustand und einem Wiedergabe-Betriebszustand umschaltbar. Zum Umschalten der Einrichtung 34 weist dieselbe einen Steuereingang 35 auf, dem mit Hilfe des Mikrocomputers 23 erzeugbare und an einem Ausgang 36 desselben abgegebene Steuersignale zuführbar sind.

Die Aufzeichnungs- und Wiedergabe-Einrichtung 34 weist zwei mit den Ausgängen 32 und 33 der Signalverarbeitungseinrichtung 27 verbundene Eingänge 37 und 38 auf. Vom Eingang 38 sind die aufzuzeichnenden Bildsignale V zwei rotierend antreibbaren Magnetköpfen 39 und 40 einer trommelförmigen Abtasteinrichtung 41 zuführbar, um die ein Magnetband 42 herumgeschlungen gehalten ist, um mit den rotiernd antreibbaren Magnetköpfen 39 und 40 die Bildsignale V auf dem Magnetband 42 aufzeichnen zu können.

Mit dem Magnetband 42 steht weiters ein stationärer Magnetkopf 43 in Abtastverbindung, dem die dem Eingang 37 zugeführten aufzuzeichnenden Tonsignale A zum Aufzeichnen derselben auf dem Magnetband 42 zugeführt werden.

Die Aufzeichnungs- und Wiedergabe-Einrichtung 34 weist weiters zwei Ausgänge 44 und 45 auf, denen die mit dem Magnetkopf 43 wiedergegebenen Tonsignale A und die mit den rotierend antreibbaren Magnetköpfen 39 und 40 wiedergegebenen Bildsignale V zugeführt werden. Von den Ausgängen 44 und 45 der Einrichtung 34 werden die wiedergegebenen Tonsignale A und Bildsignale V zwei Eingängen 46 und 47 der Signalverarbeitungseinrichtung 27 zugeführt, die nach Verarbeitung der wiedergegebenen Tonsignale A und Bildsignale V diese Signale an zwei Ausgängen 48 und 49 abgibt.

Der Videorecorder 2 weist eine Umschalteinrichtung 50 auf, die zwischen einem Aufzeichnungs-Schaltzustand (volle Linien) und einem Wiedergabe-Schaltzustand (strichlierte Linien) umschaltbar ist. Zum Umschalten der Umschalteinrichtung 50 weist dieselbe einen Steuereingang 51 auf, dem mit Hilfe des Mikrocomputers 23 erzeugte und an einem Ausgang 52 desselben abgegebene Steuersignale zuführbar sind. Mit einem Eingang 53 und einem Eingang 54 der Umschalteinrichtung 50 sind der erste Ausgang 25 und der zweite Ausgang 26 des Frontends 20 verbunden. Mit einem weiteren Eingang 55 und einem weiteren Eingang 56 der Umschalteinrichtung 50 sind die Ausgänge 48 und 49 der Signalverarbeitungseinrichtung 27 verbunden. Mit der Umschalteinrichtung 50 sind entweder der Eingang 53 oder der weitere Eingang 55 mit einem ersten Ausgang 57 der Umschalteinrichtung 50 bzw. der Eingang 54 oder der weitere Eingang 56 mit einem zweiten Ausgang 58 der Umschalteinrichtung 50 verbindbar.

Am ersten Ausgang 57 der Umschalteinrichtung 50 tritt je nach Schaltzustand der Umschalteinrichtung 50 entweder das empfangene, demodulierte und aufzuzeichnende Tonsignal A oder das wiedergegebene Tonsignal A auf. Am zweiten Ausgang 58 der Umschalteinrichtung 50 tritt je nach Schaltzustand der Umschalteinrichtung 50 entweder das empfangene, demodulierte und aufzuzeichnende Bildsignal V oder das wiedergegebene Bildsignal V auf.

Der Videorecorder 2 weist einen Modulator 59 auf, von dem ein erster Eingang 60 mit dem ersten Ausgang 57 der Umschalteinrichtung 50 und ein zweiter Eingang 61 mit dem zweiten Ausgang 58 der Umschalteinrichtung 50 verbunden ist. Mit dem Modulator 59 sind die ihm zugeführten Tonsignale A und Bildsignale V in bekannter Weise modulierbar. Nach der Modulation dieser Signale gibt der Modulator 59 dieselben an seinem Ausgang 62 ab, der mit der Anschlußbuchse 13 verbunden ist.

Der erste Ausgang 57 der Umschalteinrichtung 50 ist weiters mit einem Anschluß 63 der Anschlußeinrichtung 4 und der zweite Ausgang 58 der Umschalteinrichtung 50 ist mit einem Anschluß 64 der Anschlußeinrichtung 4 verbunden.

Der Videorecorder 2 weist zum Einschalten seiner Betriebsarten eine Betriebsarten-Einschalteinrichtung 65 auf, die unter Ausnützung des Mikrocomputers 23 realisiert ist. Die Betriebsarten-Einschalteinrichtung 65 weist einen am Videorecorder 2 vorgesehenen Satz 66 von Drucktasten auf. Weiters enthält die Betriebsarten-Einschalteinrichtung 65 einen Fernsteuersignalempfänger 67, mit dem die von einem Fernsteuersignalgeber einer Fernsteuereinrichtung 68 abgegebenen Fernsteuersignale empfangen werden können. Die Schaltkontakte 69 der Drucktasten des Drucktastensatzes 66 und der Ausgang 70 des Fernsteuersignalempfängers 67 sind mit Eingängen 71 des Mikrocomputers 23 verbunden. Mit Hilfe des Mikrocomputers 23 ist eine schematisch mit strichlierten Linien angedeutete Einrichtung 72 zum Verarbeiten der dem Mikrocomputer 23 an seinen Eingängen 71 zugeführten Schaltbefehle realisiert. Mit der Einrichtung 72 sind Steuersignale erzeugbar, mit denen Gerätekomponenten des Videorecorders 2 steuerbar sind. Die Einrichtung 72 gibt auch jene Steuersignale an die Ausgänge 24, 29, 36 und 52 ab, die zum Steuern des Tuners 20a und zum Umschalten der Signalverarbeitungseinrichtung 27 und der Aufzeichnungs- und Wiedergabe-Einrichtung 34 zwischen ihren Aufzeichnungs-Betriebszuständen und ihren Wiedergabe-Betriebszuständen und zum Umschalten der Umschalteinrichtung 50 zwischen ihrem Aufzeichnungs-Schaltzustand und ihrem WiedergabeSchaltzustand dienen.

Der Videorecorder 2 ist mit einer Steuersignal-Erzeugungseinrichtung 73 ausgerüstet, die im vorliegenden Fall ebenso mit Hilfe des Mikrocomputers 23 realisiert ist. Diese Steuersignal-Erzeugungseinrichtung 73 kann aber auch als separater Bestandteil ohne Zuhilfenahme des Mikrocomputers 23 realisiert sein. Die Steuersignal-Erzeugungscinrichtung 73 ist wie dies schematisch mit einer strichlierten Linie 74 angedeutet ist - von der Einrichtung 72 zum Verarbeiten der eingegebenen Schaltbefehle und zum Abgeben von Steuersignalen steuerbar, und zwar in der Weise, daß die Steuersignal-Erzeugungseinrichtung 73 bei im Videorecorder 2 eingeschalteter Betriebsart "Wiedergeben" aktiviert ist und dabei ein Wiedergabe-Steuersignal V(Pb) erzeugt.

Bei diesem Wiedergabe-Steuersignal V(Pb) handelt es sich um eine Gleichspannung, die innerhalb von zwei höheren Pegelwertbereichen liegen kann, und zwar z.B. zwischen 5 und 7 Volt oder zwischen 9,5 und 12 Volt. Bei desaktivierter Steuersignal-Erzeugungseinrichtung 73 gibt dieselbe eine Gleichspannung in einem niedrigen Pegelwertbereich ab, der zwischen Null und 2,5 Volt liegt. Das Wiedergabe-Steuersignal V(Pb) wird von der Steuersignal-Erzeugungseinrichtung 73 an einen Ausgang 75 des Mikrocomputers 23 abgegeben. Das Wiedergabe-Steuersignal V(Pb) ist zugleich mit einem in der Betriebsart "Wiedergeben" im Videorecorder 2 wiedergegebenen Femsehprogrammsignal der Anschlußeinrichtung 4 des Videorecorders 2 zuführbar, und zwar wird das Wiedergabe-Steuersignal V(Pb) einem Anschluß 76 der Anschlußeinrichtung 4 zugeführt.

Der Fernsehempfänger 3 des Videosystems 1 gemäß Fig. 1 weist ebenfalls eine üblicherweise als Frontend bezeichnete Schaltungsausbildung 77 auf, die einen elektronisch abstimmbaren Tuner 77a, dessen Eingang 78 mit der Anschlußbuchse 14 des Fernsehempfängers 3 verbunden ist, und einen dem Tuner 77a nachgeschalteten Zwischenfrequenzteil 77b aufweist. Das Fronted 77 ist mit einem Steuereingang 79 zum Steuern des Tuners 77a versehen, dem von einem Mikrocomputer 80 des Fernsehempfängers 3 erzeugbare, an einem Ausgang 81 desselben abgegebene Steuersignale zuführbar sind. Mit einem dieser Steuersignale wird ein aufeinanderfolgendes Abstimmen des Tuners 77a auf verschiedene Sender ausgelöst, und ein anderes dieser Steuersignale bewirkt ein Festhalten des Tuners 77a auf einen zuvor abgestimmten Sender. Das Frontend 77 bzw. dessen Zwischenfrequenzteil 77b weist einen ersten Ausgang 82 und einen zweiten Ausgang 83 auf. Der Tuner 77a des Frontends 77 ist auf jeweils einen Sender aus einer Mehrzahl von Sendern abstimmbar, und nach einer Abstimmung auf einen Sender gibt der Zwischenfrequenzteil 77b des Frontends 77 ein empfangenes Fernsehprogrammsignal ab, wobei das Frontend 77 an seinem ersten Ausgang 82 jeweils die demodulierten Tonsignale A und an seinem zweiten Ausgang 83 jeweils die demodulierten Bildsignale V abgibt.

Der Fernsehempfänger 3 weist eine Umschalteinrichtung 84 auf, die zwischen einem ersten Wiedergabe-Schaltzustand (volle Linien) und einem zweiten Wiedergabe-Schaltzustand (strichlierte Linien) umschaltbar ist. Zum Umschalten der Umschalteinrichtung 84 ist dieselbe mit einem Steuereingang 85 versehen, dem ein Steuersignal V(S) zum Umschalten der Umschalteinrichtung 84 zuführbar ist. Auf die Erzeugung des Steuersignales V(s) ist nachfolgend noch näher eingangen. Der erste Wiedergabe-Schaltzustand der Umschalteinrichtung 84 entspricht einer ersten Wiedergabe-Betriebsart des Fernsehempfängers 3, in der die von seinem Frontend 77 abgegebenen Bildsignale V und Tonsignale A wiedergegeben werden. Der zweite Wiedergabe-Schaltzustand der Umschalteinrichtung 84 entspricht einer zweiten Wiedergabe-Betriebsart des Fernsehempfängers 3, in der die dem Fernsehempfänger 3 über seine Anschlußeinrichtung 5 von dem Videorecorder 2 zugeführten Bildsignale V und Tonsignale A wiedergegeben werden.

Die Umschalteinrichtung 84 weist zwei Eingänge 86 und 87 auf, die mit dem ersten Ausgang 82 und dem zweiten Ausgang 83 des Frontends 77 verbunden sind. Die Umschalteinrichtung 84 weist weiters einen weiteren Eingang 88 und einen weiteren Eingang 89 auf, von denen der weitere Eingang 88 mit einem Anschluß 90 der Anschlußeinrichtung 5 und der weitere Eingang 89 mit einem Anschluß 91 der Anschlußeinrichtung 5 verbunden ist.

Im zweiten Wiedergabe-Schaltzustand der Umschalteinrichtung 82 sind die beiden weiteren Eingänge 88 und 89 der Umschalteinrichtung 84 mit den beiden Ausgängen 92 und 93 der Umschalteinrichtung 84 verbunden. Mit dem Ausgang 92 der Umschalteinrichtung 84 ist ein Tonsignalverstärker 94 verbunden, der einen Lautsprecher 95 zur akustischen Wiedergabe der Tonsignale speist. Mit dem Ausgang 93 der Umschalteinrichtung 84 ist ein Eingang 96 einer Fernsehsignal-Verarbeitungseinrichtung 97 verbunden, die an ihren Ausgängen 98, von denen in Fig. 1 drei Ausgänge dargestellt sind, Signale zum Ansteuern einer Bildröhre 99 des Fernsehempfängers 3 abgibt, welche Signale über Leitungen 100 der Bildröhre 99 zugeführt werden.

Wenn die Umschalteinrichtung 84 sich in ihrem ersten WiedergabeSchaltzustand befindet, werden die vom Frontend 77 des Fernsehempfängers 3 abgegebenen Tonsignale A und Bildsignale V mit dem Lautsprecher 95 bzw. der Bildröhre 99 wiedergegeben. Wenn sich die Umschalteinrichtung 84 in ihrem zweiten Wiedergabe-Schaltzustand befindet, werden die an den Ausgängen 57 und 58 der Umschaltungeinrichtung 50 des Videorecorders 2 abgegebenen Tonsignale A und Bildsignale V, die über die Anschlußeinrichtung 4 des Videorecorders 2, die Kabelverbindung 6 und die Anschlußeinrichtung 5 des Fernsehempfängers 3 der Umschalteinrichtung 84 des Fernsehempfängers 3 zugeführt werden, mit dem Lautsprecher 95 bzw. der Bildröhre 99 des Fernsehempfängers 3 wiedergegeben.

Der Fernsehempfänger 3 enthält eine Detektionseinrichtung 101, die zum Detektieren des von der Steuersignal-Erzeugungseinrichtung 73 des Videorecorders 2 erzeugten und abgegebenen Wiedergabe-Steuersignales V(Pb) vorgesehen und ausgebildet ist. Hierfür ist ein Eingang 102 der Detektionseinrichtung 101 mit einem Anschluß 103 der Anschlußeinrichtung 5 des Fernsehempfängers 3 verbunden. Der Anschluß 103 der Anschlußeinrichtung 5 ist über die Leitung 9 der Kabelverbindung 6 mit dem Anschluß 76 der Anschlußeinrichtung 4 des Videorecorders 2 verbunden, dem vom Ausgang 75 des Mikrocomputers 23 das Wiedergabe-Steuersignal V(Pb) zugeführt wird.

Die Detektionseinrichtung 101 ist als Gleichspannungsdetektor ausgebildet, und sie gibt für die Dauer, während der ihrem Eingang 102 ein Wiedergabe-Steuersignal V(Pb) zugeführt wird, an einem Ausgang 104 das Steuersignal V(S) ab. Der Ausgang 104 der Detektionseinrichtung 101 ist hiebei mit dem Steuereingang 85 der Umschalteinrichtung 84 verbunden. Sobald die Detektionseinrichtung 101 das Steuersignal V(S) über ihren Ausgang 104 an den Steuereingang 85 der Umschalteinrichtung 84 abgibt, wird die Umschalteinrichtung 84 in ihren zweiten Wiedergabe-Schaltzustand (strichlierte Linien) umgeschaltet. Sobald das Steuersignal V(S) wieder entfällt bzw. solange kein Steuersignal V(S) auftritt, bleibt die Umschalteinrichtung 84 in ihrem ersten Wiedergabe-Schaltzustand (volle Linien).

Bei dem vorliegenden Videosystem 1 gemäß der Fig. 1 weist nunmehr der Videorecorder 2 eine Zeitfenster-Erzeugungseinrichtung 105 zum Erzeugen eines Zeitfensters mit einer vorgegebenen Zeitfensterlänge T auf. Die Zeitfenster-Erzeugungseinrichtung 105 ist hiebei ebenso mit dem Mikrocomputer 23 realisiert wie die Einrichtung 72 zum Verarbeiten der eingegebenen Schaltbefehle und zum Abgeben der Steuersignale und wie die Steuersignal-Erzeugungseinrichtung 73.

Die Zeitfenster-Erzeugungseinrichtung 105 kann aber auch als separater Baustein ohne Ausnützung des Mikrocomputers 23 realisiert werden. Die Zeitfenster-Erzeugungseinrichtung 105 ist von der Betriebsarten-Einschalteinrichtung 65, und zwar im vorliegenden Fall von der einen Teil der Betriebsarten-Einschalteinrichtung 65 bildenden Einrichtung 72 zum Verarbeiten der eingegebenen Schaltbefehle und zum Abgeben der Steuersignale steuerbar, wie dies in Fig. 1 mit einer strichlierten Linie 106 angedeutet ist. Die Steuerung der Zeitfenster-Erzeugungseinrichtung 105 durch die Betriebsarten-Einschalteinrichtung 65 erfolgt hiebei in der Weise, daß die Zeitfenster-Erzeugungseinrichtung 105 infolge des Auslösens des Einschaltens mindestens einer mit der Betriebsarten-Einschalteinrichtung 65 einschaltbaren, von der Betriebsart "Wiedergeben" abweichenden vorgegebenen Betriebsart das Zeitfenster mit der vorgegebenen Zeitfensterlänge T mindestens einmal erzeugt.

Die Zeitfenster-Erzeugungseinrichtung 105 steuert bei dem Videorecorder 2 des Videosystems 1 gemäß Fig. 1 die Steuersignal-Erzeugungseinrichtung 73, wie dies in Fig. 1 mit einer strichlierten Linie 107 angedeutet ist. Die Steuerung der Steuersignal-Erzeugungseinrichtung 73 durch die Zeitfenster-Erzeugungseinrichtung 105 erfolgt dabei in der Weise, daß die Steuersignal-Erzeugungseinrichtung 73 das Wiedergabe-Steuersignal V(Pb) auch dann erzeugt und abgibt, wenn die ZeitfensterErzeugungseinrichtung 105 das Zeitfenster mit der Zeitfensterlänge T erzeugt.

Bei dem Videorecorder 2 des Videosystems 1 gemäß Fig. 1 ist die Ausbildung so getroffen, daß die Betriebsarten-Einschalteinrichtung 65, und zwar deren Einrichtung 72 infolge des Auslösens des Einschaltens der Betriebsart "Aufzeichnen" die Zeitfenster-Erzeugungseinrichtung 105 zum Erzeugen des Zeitfensters mit der Zeitfensterlänge T ansteuert, worauf nachfolgend anhand der Fig. 2 noch näher eingegangen ist.

Der Videorecorder 2 des Videosystems 1 gemäß Fig. 1 weist weiters eine Detektionseinrichtung 108 auf, die im vorliegenden Fall ebenso mit Hilfe des Wikrocomputers 23 realisiert ist. Der Detektionseinrichtung 108 sind von der Einrichtung 72 zum Verarbeiten der eingegebenen Schaltbefehle und zum Abgeben der Steuersignale Informationen zuführbar, die das mittels der Betriebsarten-Einschalteinrichtung 65 durchgeführte Auslösen eines Abstimmens des Tuners 20a des Videorecorders 2 auf einen anderen Sender kennzeichnen, wie dies in Fig. 1 mit einer strichlierten Linie 109 angedeutet ist. Der Detektionseinrichtung 108 sind weiters von der Zeitfenster-Erzeugungseinrichtung 105 Informationen zuführbar, mit denen der Detektionseinrichtung 108 das Auslösen des Erzeugens eines Zeitfensters mitgeteilt wird, wie dies in Fig. 1 mit einer strichlierten Linie 110 schematisch angedeutet ist. Mit der Detektionseinrichtung 108 ist das mittels der Betriebsarten-Einschalteinrichtung 65 durchgeführte Auslösen eines Abstimmens des Tuners 20a des Videorecorders 2 auf einen anderen Sender innerhalb der vorgegebenen Zeitfensterlänge T des infolge des Auslösens des Einschaltens der mindestens einen vorgegebenen Betriebsart, nämlich der Betriebsart "Aufzeichnen", von der Zeitfenster-Erzeugungseinrichtung 105 erzeugten Zeitfensters feststellbar.

Die Detektionseinrichtung 108 steuert die Zeitfenster-Erzeugungseinrichtung 105, wie dies in Fig. 1 mit einer strichlierten Linie 111 schematisch angedeutet ist. Diese Steuerung erfolgt in der Weise, daß die ZeitfensterErzeugungseinrichtung 105, ab dem Zeitpunkt des Feststellens des Auslösens eines Abstimmens des Tuners 20a des Videorecorders 2 auf einen anderen Sender das Zeitfenster mit der vorgegebenen Zeitfensterlänge T erzeugt.

Wenn in dem Videorecorder 2 des Videosystems 1 gemäß Fig.1 mit Hilfe der Betriebsarten-Einschalteinrichtung 65 die Betriebsart "Wiedergeben" eingeschaltet wird, steuert die Einrichtung 72 zum Verarbeiten der eingegebenen Schaltbefehle und zum Abgeben der Steuersignale die Steuersignal-Erzeugungseinrichtung 73 an, was zur Folge hat, daß die Steuersignal-Erzeugungseinrichtung 73 für die Dauer, während der im Videorecorder 2 die Betriebsart "Wiedergeben" eingeschaltet ist, das Wiedergabe-Steuersignal V(Pb) abgibt, wie dies in Fig.3 dargestellt ist. Dieses Wiedergabe-Steuersignal V(Pb) wird vom Ausgang 75 des Mikrocomputers 23 über den Anschluß 76 der Anschlußeinrichtung 4 des Videorecorders 2, die Leitung 9 der Kabelverbindung 6, den Anschluß 103 der Anschlußeinrichtung 5 des Fernsehempfängers 3 dem Eingang 102 der Detektionseinrichtung 101 zugeführt. Daraufhin gibt die Detektionseinrichtung 101 für die Dauer, für die das WiedergabeSteuersignal V(Pb) vorhanden ist, das Steuersignal V(S) an den Steuereingang 85 der Umschalteinrichtung 84 ab, wodurch die Umschalteinrichtung 84 in ihren zweiten Wiedergabe-Schaltzustand umgeschaltet wird, in der die weiteren Eingänge 88 und 89 mit den Ausgängen 92 und 93 der Umschalteinrichtung 84 verbunden sind. Dadurch werden die an den Ausgängen 57 und 58 der Umschalteinrichtung 50 des Videorecorders 2 abgegebenen Tonsignale A und Bildsignale V mit dem Fernsehempfänger 3 wiedergegeben. Bei diesen Tonsignalen A und Bildsignalen V handelt es sich, da im Videorecorder 2 wie erwähnt die Betriebsart "Wiedergeben" eingeschaltet ist, um die vom Magnetband 42 mit Hilfe der Aufzeichnungs- und Wiedergabe-Einrichtung 34 wiedergegebenen und mit der Signalverarbeitungseinrichtung 27 verarbeiteten Ton- und Bildsignale. Durch das Wiedergabe-Steuersignal V(Pb) wird somit im Fernsehempfänger 3 automatisch die zweite Wiedergabe-Betriebsart eingeschaltet, in der die in dem soeben beschriebenen Fall im Videorecorder 2 wiedergegebenen Tonsignale A und Bildsignale V wiedergegeben werden.

Im folgenden ist anhand von dem in Fig. 2 dargestellten Flußdiagramm ein Programmablauf beschrieben, der im Mikrocomputer 23 des Videorecorders 2 abgearbeitet wird, um beim Einschalten der Betriebsart "Aufzeichnen" im Videorecorder 2 das in Fig. 4 dargestellte Wiedergabe-Steuersignal V(Pb) zu erzeugen, um ein kurzzeitiges Wiedergeben der zum Aufzeichnen im Videorecorder 2 vorgesehenen Tonsignale A und Bildsignale V mit dem Fernsehempfänger 3 zur akustischen und optischen Kontrolle der zur Aufzeichnung vorgesehenen Tonsignale A und Bildsignale V zu erreichen.

Beim Block 112 wird der Programmablauf entsprechend dem Flußdiagramm gemäß Fig. 2 gestartet. Danach wird beim Block 113 geprüft, ob an der Fernsteuereinrichtung 68 oder am Videorecorder 2 die Taste zum Einschalten der Betriebsart "Aufzeichnen" betätigt wurde. Wenn dies nicht der Fall ist, wird der Programmablauf beim Block 114 beendet, wonach zu einem anderen Programmablauf übergegangen wird. Wenn hingegen beim Block 113 eine Betätigung der Taste zum Einschalten der Betriebsart "Aufzeichnen" festgestellt wird, dann wird nachfolgend beim Block 115 geprüft, ob zuvor ein bewußter Steuerbefehl zum Einschalten der erwünschten Kontrollfunktion bezüglich des empfangenen und zur Aufzeichnung vorgesehenen Fernsehprogrammsignales eingeschaltet wurde. Ein solcher Steuerbefehl kann beispielsweise durch Betätigen einer separaten Taste zum Einschalten dieser Kontrollfunktion erfolgen. Diese Kontrollfunktion kann mit dem Synonym "SWYR" bezeichnet werden, wobei dieses Synonym für die Bezeichnung "See what you receive and record" steht. Wenn die Prüfung beim Block 115 negativ ausfällt, dann wird der Programmablauf beim Block 116 beendet. Fällt hingegen die Prüfung beim Block 115 positiv aus, dann wird der Programmablauf beim Block 117 fortgesetzt. Beim Block 117 wird die Steuersignal-Erzeugungseinrichtung 73 akitivert, es wird also das Abgeben einer Steuergleichspannung V(Pb) zu einem Zeitpunkt Tₒ ausgelöst. Danach wird beim Block 118 die Zeitfenster-Erzeugungseinrichtung 105, die durch einen mikrocomputerinternen Timer gebildet ist, rückgesetzt und gestartet. Danach wird beim Block 119 die Detektionseinrichtung 108 in Funktion gesetzt, und zwar in der Weise, daß beim Block 119 geprüft wird, ob der Benutzer des Videorecorders 2 eine bewußte Handlung, insbesondere eine Tastenbetätigung, zum Auslösen eines Abstimmens des Tuners 20a des Videorecorders 2 auf einen anderen Sender durchgeführt hat. Vorerst sei angenommen, daß eine solche bewußte Tastenbetätigung nicht stattgefunden hat. Für diesen Fall wird der Programmablauf beim Block 120 fortgesetzt, bei dem geprüft wird, ob der die Zeitfenster-Erzeugungseinrichtung 105 bildende Timer bereits einen bestimmten Zählwert bzw. Zeitwert, der der gewünschten Zeitfensterlänge T entspricht, erreicht bzw. überschritten hat. Wenn dies nicht der Fall ist, wird der Programmablauf neuerlich beim Block 119 fortgesetzt. Wenn bei der Prüfung beim Block 120 hingegen festgestellt wird, daß die gewünschte Zeitfensterlänge T bereits erreicht ist, wird nachfolgend beim Block 121 die Steuersignal-Erzeugungseinrichtung 73 desaktiviert, also die Erzeugung des Wiedergabe-Steuersignales V(Pb) nach Ablauf der Zeitfensterlänge T zu einem Zeitpunkt t1 beendet. Danach wird der Programmablauf beim Block 122 beendet.

Durch Abarbeiten des vorstehend beschriebenen Programmablaufes wird das in Fig. 4 dargestellte Wiedergabe-Steuersignal V(Pb) erzeugt. Die Erzeugung dieses Wiedergabe-Steuersignales V(Pb) wird durch das Einschalten der Betriebsart "Aufzeichnen" im Videorecorder 2 ausgelöst und hat zur Folge, daß für die Dauer des Auftretens dieses Wiedergabe-Steuersignales V(Pb) der Fernsehempfänger 3, in dem dieses Wiedergabe-Steuersignal V(Pb) mit der Detektionseinrichtung 101 detektiert wird, in dessen zweite Wiedergabe-Betriebsart geschaltet wird, in der dann in dem soeben beschriebenen Fall ein akustisches und optisches Wiedergeben der zum Aufzeichnen vorgesehenen Tonsignale A und Bildsignale V, die das Frontend 20 des Videorecorders 2 an die Signalverarbeitungseinrichtung 27 und die Umschalteinrichtung 50 abgibt, zu Kontrollzwecken erfolgt.

Wenn in dem anhand des Flußdiagrammes gemäß Fig. 2 beschriebenen Programmablauf beim Block 119 festgestellt wird, daß nach dem beim Block 118 ausgelösten Starten der Zeitfenster-Erzeugungseinrichtung 105 - wonach dann bereits im Fernsehempfänger 3 ein Wiedergeben der zum Aufzeichnen im Videorecorder 2 vorgesehenen Tonsignale A und Bildsignale V erfolgt - der Benützer des Videorecorders 2 eine bewußte Tastenbetätigung zum Auslösen eines Abstimmens des Tuners 20a des Videorecorders 2 auf einen anderen Sender innerhalb der festgelegten Zeitfensterlänge T durchgeführt hat, um mit dem Videorecorder 2 ein anderes Fernsehprogrammsignal empfangen und aufzeichnen zu können, dann wird der Programmablauf nicht beim Block 120, sondern neuerlich beim Block 118 begonnen, was bedeutet, daß durch das bewußte Auslösen eines Abstimmvorganges des Tuners 20a des Videorecorders 2 innerhalb des Zeitfensters die Zeitfenster-Erzeugungseinrichtung 105 neuerlich rückgesetzt und gestartet wird, wie dies in Fig. 5 zum Zeitpunkt t1 angegeben ist.

Wenn in einem solchen Fall beim neuerlichen Erreichen des Blockes 119 neuerlich ein bewußtes Auslösen eines Abstimmvorganges des Tuners 20a des Videorecorders 2 innerhalb des Zeitfensters beispielsweise zum Zeitpunkt t2 festgestellt wird, hat dies neuerlich eine Fortsetzung des Programmablaufes beim Block 118 zur Folge, wie dies in Fig. 5 zum Zeitpunkt t2 angegeben ist.

In Fig. 5 ist ein Verlauf eines Wiedergabe-Steuersignales V(Pb) dargestellt, bei dem der Benützer des Videorecorders 2 nach dem erstmaligen Aktivieren der Zeitfenster-Erzeugungseinrichtung 105 durch das Betätigen der Taste zum Einschalten der Betriebsart "Aufzeichnen" insgesamt dreimal ein bewußtes Auslösen eines Abstimmvorganges des Tuners 20a des Videorecorders 2 innerhalb des jeweils zuvor gestarteten Zeitfensters vorgenommen hat, und zwar zu den Zeitpunkten t1, t2 und t3. Dies hat zur Folge, daß das Beenden der Erzeugung des Wiedergabe-Steuersignales V(Pb) erst zu einem Zeitpunkt t4 stattfindet, wodurch die Kontrollwiedergabe der vom Frontend 20 des Videorecorders 2 abgegebenen Tonsignale A und Bildsignale V mit dem an den Videorecorder 2 angeschlossenen Fernsehempfänger 3 auf eine gewünschte längere Zeitspanne ausgedehnt ist.

Anhand des Flußdiagrammes gemäß Fig. 6 ist ein Programmablauf beschrieben, der in einem Mikrocomputer eines Videorecorders 2 gemäß einem zweiten Ausführungsbeispiel der Erfindung abgearbeitet wird, um nicht schon beim Einschalten der Betriebsart "Aufzeichnen" eine Kontrollwiedergabe der aufzuzeichnenden Tonsignale A und Bildsignale V eines Fernsehprogrammsignales an einem an den Videorecorder 2 angeschlossenen Fernsehempfänger 3 vorzunehmen, sondern bei bereits seit längerer Zeit im Videorecorder 2 eingeschalteter Betriebsart "Aufzeichnen" eine Kontrollwiedergabe der zur Aufzeichnung vorgesehenen Tonsignale A und Bildsignale V vorzunehmen, wodurch es möglich ist, auf einfache Weise zu überprüfen, ob noch immer das zur Aufzeichnung gewünschte Fernsehprogrammsignal aufgezeichnet wird oder ob - aus welchen Gründen immer - das zur Aufzeichnung gewünschte Fernsehprogrammsignal bereits beendet ist oder zwischenzeitlich durch ein anderes Fernsehprogrammsignal ersetzt wurde.

Beim Block 123 wird der Programmablauf gemäß Fig. 6 begonnen. Danach wird beim Block 124 geprüft, ob im Videorecorder 2 bereits die Betriebsart "Aufzeichnen" eingeschaltet ist. Wenn dies nicht der Fall ist, wird der Programmablauf beim Block 125 beendet. Wird hingegen beim Block 124 festgestellt, daß die Betriebsart "Aufzeichnen" bereits eingeschaltet ist, wird der Programmablauf beim Block 126 fortgesetzt, bei dem analog wie beim Block 113 gemäß Fig. 2 geprüft wird, ob die Taste zum Einschalten der Betriebsart "Aufzeichnen" betätigt wurde. Ist dies nicht der Fall, wird der Programmablauf beim Block 127 beendet. Ist dies hingegen der Fall, wird beim Block 128 analog wie beim Block 115 gemäß Fig. 2 geprüft, ob ganz bewußt die "SWYR"-Funktion (See what you receive and record) zuvor aktiviert wurde. Ist dies nicht der Fall, wird der Programmablauf beim Block 129 beendet. Ist dies jedoch der Fall, wird der Programmablauf beim Block 130 fortgesetzt, bei dem dieselben Maßnahmen erfolgen wie beim Block 117 gemäß Fig. 2. Danach erfolgen beim Block 131 dieselben Maßnahmen wie beim Block 118 gemäß Fig. 2. Danach wird der Programmablauf beim Block 133 fortgesetzt, bei dem dieselben Maßnahmen wie beim Block 120 gemäß Fig. 2 erfolgen. Danach wird der Programmablauf beim Block 134 fortgesetzt, bei dem dieselben Maßnahmen wie beim Block 121 Gemäß Fig. 2 erfolgen.

Danach wird der Programmablauf beim Block 135 beendet. Durch Arbeiten dieses Programmablaufes wird bei bereits im Videorecorder 2 eingeschalteter Betriebsart "Aufzeichnen" und hiebei bewußter nochmaliger Betätigung der Taste zum Einschalten der Betriebsart "Aufzeichnen" eine Erzeugung des Wiedergabe-Steuersignales V(Pb) für die Dauer der Zeitfensterlänge T erreicht, so daß für diese Zeitspanne eine Kontrollwiedergabe an einem an den Videorecorder 2 angeschlossenen Fernsehempfänger 3 erfolgt.

Beim dem Programmablauf gemäß Fig. 6 kann in Abwandlung gegenüber dem zuvor beschriebenen Ablauf nach dem Block 131 auch noch ein Block 132 abgearbeitet werden, bei dem geprüft wird, ob die Taste zum Einschalten der Betriebsart "Aufzeichnen" nochmals bewußt betätigt wurde. Wenn dies der Fall ist, wird der Programmablauf neuerlich beim Block 131 - der dem Block 114 gemäß Fig. 2 entspricht - fortgesetzt, wodurch die Zeitfenster-Erzeugungseinrichtung 105 neuerlich gestartet wird.

Auf diese Weise kann durch mehrmaliges Betätigen der Taste zum Einschalten der Betriebsart "Aufzeichnen" nach einem Starten der Zeitfenster-Erzeugungseinrichtung 105 die Erzeugung des Zeitfensters verlängert werden, um eine wie vom Benützer des Videorecorders 2 gewünschte Zeitdauer für die Kontrollwiedergabe am Fernsehempfänger 3 zu erreichen.

Anhand von dem in Fig. 7 dargestellten Flußdiagramm ist nachfolgend ein Programmablauf beschrieben, der in einem Mikrocomputer eines Videorecorders 2 gemäß einem dritten Ausführungsbeispiel der Erfindung abgearbeitet wird. Durch Abarbeiten dieses Programmablaufes ist es bei in einer Betriebsart "Stand by" befindlichem Videorecorder 2 durch Betätigen der Taste zum Einschalten der Betriebsart "Stop" im Videorecorder 2 möglich, eine Kontrollwiedergabe mit einem an den Videorecorder 2 angeschlossenen Fernsehempfänger 3 durchzuführen, wobei bei dieser Kontrollwiedergabe die vom Frontend 20 des Videorecorders 2 abgegebenen Tonsignale A und Bildsignale B akustisch und optisch wiedergegeben werden, ohne daß diese Signale im Videorecorder 2 aufgezeichnet werden.

Der Programmablauf gemäß Fig. 7 wird beim Block 136 begonnen. Danach wird beim Block 137 geprüft, ob die Taste zum Einschalten der Betriebsart "Stop" im Videorecorder 2 betätigt wurde. Ist dies nicht der Fall, wird der Programmablauf beim Block 138 beendet. Ist dies hingegen der Fall, wird beim Block 139 geprüft, ob die "SWYR"-Funktion (See what you receive) zuvor vom Benützer des Videorecorders 2 bewußt aktiviert wurde. Dies kann beispielsweise durch Betätigen einer separaten "SWYR"-Taste erfolgen. Bei einem negativen Prüfungsergebnis beim Block 139 wird der Programmablauf beim Block 140 fortgesetzt und beendet. Bei einem positiven Prüfungsergebnis beim Block 139 wird der Programmablauf beim Block 141 fortgesetzt, bei dem dieselben Maßnahmen wie beim Block 117 gemäß Fig. 2 erfolgen. Danach wird der Programmablauf beim Block 142 fortgesetzt, bei dem dieselben Maßnahmen wie beim Block 118 gemäß Fig. 2 erfolgen. Danach kann der Programmablauf beim Block 143 fortgesetzt werden, bei dem dieselben Maßnahmen erfolgen wie beim Block 119 gemäß Fig. 2. Danach wird der Programmablauf beim Block 144 fortgesetzt, bei dem dieselben Maßnahmen erfolgen wie beim Block 120 gemäß Fig. 2. Danach wird der Programmablauf beim Block 145 fortgesetzt, bei dem dieselben Maßnahmen erfolgen wie beim Block 121 gemäß Fig. 2. Schließlich wird der Programmablauf gemäß Fig.7 beim Block 146 beendet.

Durch Abarbeiten dieses Programmablaufes ist erreicht, daß durch Betätigen der Taste zum Einschalten der Betriebsart "Stop" im Videorecorder eine kurzzeitige Kontrollwiedergabe der vom Frontend des Videorecorders abgegebenen Tonsignale und Bildsignale mit einem an den Videorecorder angeschlossenen Fernsehempfänger durchgeführt wird.

Bei allen Videorecordern gemäß den vorstehend beschriebenen Ausführungsbeispielen ist auf besonders einfache Weise erreicht, daß lediglich durch das Auslösen des Einschaltens einer vorgegebenen Betriebsart für eine vorgegebene Zeitspanne, nämlich der Zeitfensterlänge des Zeitfensters, das Wiedergabe-Steuersignal, das mittels der Steuersignal-Erzeugungseinrichtung des betreffenden Videorecorders während der vorgegebenen Zeitspanne erzeugt wird, an einen an den Videorecorder angeschlossenen Fernsehempfänger abgegeben wird, so daß der Fernsehempfänger in seine zweite Wiedergabe-Betriebsart geschaltet wird und folglich das vom Frontend des Videorecorders abgegebene und über die Anschlußeinrichtung des Videorecorders sowie die Kabelverbindung und die Anschlußeinrichtung des Fernsehempfängers zum Fernsehempfänger übertragene Fernsehprogrammsignal zum Teil auf dem Bildschirm und zum Teil mit einem Lautsprecher des Fernsehempfängers zu Kontrollzwecken wiedergegeben wird und daher eine visuelle und akustische Überprüfung dieses Fernsehprogrammsignales möglich ist.

Bei einem erfindungsgemäßen Videorecorder, der zusätzlich mit einem Textsignalgenerator ausgerüstet ist, kann während einer erfindungsgemäßen Kontrollwiedergabe mit einem Fernsehempfänger am Bildschirm dieses Fernsehempfängers eine Texteinblendung gezeigt werden, die beispielsweise den Wortlaut "Dieses Programm wird aufgezeichnet" oder den Wortlaut "Dieses Programm wird empfangen" haben kann. Hiebei wird das Textsignal für eine solche Texteinblendung mit dem Textsignalgenerator des Videorecorders erzeugt und in das vom Videorecorder zum Fernsehempfänger zu Kontrollzwecken übertragene Bildsignal eingeblendet bzw. eingetastet.

## Patentansprüche

1. Videorecorder (2) mit einem Tuner (20a), der auf jeweils einen Sender aus einer Mehrzahl von Sendern abstimmbar ist und der nach einer Abstimmung auf einen Sender ein empfangenes Fernsehprogrammsignal abgibt, mit einer Aufzeichnungsund Wiedergabe-Einrichtung (34) zum Aufzeichnen eines vom Tuner (20a) abgegebenen empfangenen Fernsehprogrammsignales und zum Wiedergeben eines aufgezeichneten Fernsehprogrammsignales, und mit einer Anschlusseinrichtung (4), die mit dem Tuner (20a) verbindbar ist, um ihr das vom Tuner (20a) abgegebene empfangene Fernsehprogrammsignal zuzuführen, und an die eine Kabelverbindung (6) anschliessbar ist, die an eine Anschlusseinrichtung (5) eines Fernsehempfängers (3) anschliessbar ist, der ebenfalls einen Tuner (77a) aufweist, der auf jeweils einen Sender aus einer Mehrzahl von Sendern abstimmbar ist und der nach einer Abstimmung auf einen Sender ein empfangenes Fernsehprogrammsignal abgibt, das in einer ersten WiedergabeBetriebsart des Fernsehempfängers (3) mit demselben wiedergegeben wird, wobei über die Kabelverbindung (6) Signale von dem Videorecorder (2) weg und zu dem Videorecorder (2) hin übertragbar sind, und mit einer Betriebsarten-Einschalteinrichtung (65), mit der im Videorecorder (2) eine Betriebsart "Aufzeichnen", in der das Aufzeichnen eines vom Tuner (20a) abgegebenen empfangenen Fernsehprogrammsignales erfolgt, und eine Betriebsart "Wiedergeben", in der das Wiedergeben eines aufgezeichneten Fernsehprogrammsignales erfolgt, und weitere Betriebsarten einschaltbar sind, und mit einer Steuersignal-Erzeugungseinrichtung (73), die bei im Videorecorder (2) eingeschalteter Betriebsart "Wiedergeben" ein Wiedergabe-Steuersignal V(Pb) erzeugt und abgibt, das zugleich mit einem in der Betriebsart "Wiedergeben" im Videorecorder (2) wiedergegebenen Fernsehprogrammsignal der Anschlusseinrichtung (4) des Videorecorders (2) zuführbar ist, von der das Wiedergabe-Steuersignal V(Pb) über die Kabelverbindung (6) und die Anschlusseinrichtung (5) des Fernsehempfängers (3) einer Detektionseinrichtung (101) des Fernsehempfängers (3) zuführbar ist, mit der das Wiedergabe-Steuersignal V(Pb) detektierbar ist, wobei bei Feststellen des Wiedergabe-Steuersignales V(Pb) im Fernsehempfänger (3) eine zweite Wiedergabe-Betriebsart zum Wiedergeben des über die Kabelverbindung (6) zum Fernsehempfänger (3) übertragenen Fernsehprogrammsignales einschaltbar ist, dadurch gekennzeichnet, daß der Videorecorder (2) eine Zeitfenster-Erzeugungseinrichtung (105) zum Erzeugen eines Zeitfensters mit einer vorgegebenen Zeitfensterlänge T aufweist und daß die Betriebsarten-Einschalteinrichtung (65) die Zeitfenster-Erzeugungseinrichtung (105) steuert, so daß die Zeitfenster-Erzeugungseinrichtung (105) infolge des Auslösens des Einschaltens mindestens einer mit der Betriebsarten-Einschalteinrichtung einschaltbaren, von der Betriebsart "Wiedergeben" abweichenden vorgegebenen Betriebsart das Zeitfenster mit der vorgegebenen Zeitfensterlänge T selbsttätig mindestens einmal erzeugt, und daß die Zeitfenster-Erzeugungseinrichtung (105) die Steuersignal-Erzeugungseinrichtung (73) steuert, so daß die Steuersignal-Erzeugungseinrichtung (73) das Wiedergabe-Steuersignal V(Pb) auch dann erzeugt und abgibt, wenn die Zeitfenster-Erzeugungseinrichtung (105) das Zeitfenster erzeugt.

2. Videorecorder nach Anspruch 1, dadurch gekennzeichnet, daß die Betriebsarten-Einschaltungsinrichtung (65) infolge des Auslösens des Einschaltens der Betriebsart "Aufzeichnen" die Zeitfenster-Erzeugungseinrichtung (105) zum Erzeugen des Zeitfensters ansteuert (Fig. 1, 2, 4, 5).

3. Videorecorder nach Anspruch 1 oder 2, dadurch gekennzeichnet, daß eine Detektionseinrichtung (108) vorgesehen ist, mit der das mittels der Betriebsarten-Einschalteinrichtung (65) durchgeführte Auslösen eines Abstimmens des Tuners (20a) des Videorecorders (2) auf einen anderen Sender innerhalb der vorgegebenen Zeitfensterlänge T des infolge des Auslösens des Einschaltens der mindestens einen vorgegebenen Betriebsart von der Zeitfenster-Erzeugungseinrichtung (105) erzeugten Zeitfensters feststellbar ist, und daß diese Detektionseinrichtung (108) die Zeitfenster-Erzeugungseinrichtung (105) so steuert, daß die Zeitfenster-Erzeugungseinrichtung (105) zu dem Zeitpunkt des Feststellens des Auslösens eines Abstimmens des Tuners (20a) des Videorecorders (2) auf einen anderen Sender rückgesetzt wird und das Zeitfenster mit der vorgegebenen Zeitfensterlänge T erneut erzeugt (Fig. 1, 2, 4, 5; 7).

## Claims

1. A video recorder (2) having a tuner (20a) which can be tuned to each time one station of a plurality of stations and, after it has been tuned to a station, supplies a received television program signal, having a recording and playback device (34) for recording a received television program signal supplied by the tuner (20a) and for reproducing a recorded television program signal, and having a connector (4) which can be connected to the tuner (20a) for applying to said connector the received television program signal supplied by the tuner (20a), to which connector a cable (6) can be connected, which cable can also be connected to a connector (5) of a television receiver (3), which television receiver also has a tuner (77a) which can be tuned to each time one station of a plurality of stations and, after it has been tuned to a station, supplies a received television program signal, which is reproduced by the television receiver (3) in a first reproduction mode thereof, the cable (6) enabling signals to be transferred away from the video recorder (2) and to the video recorder (2), and having a mode selection device (65) by means of which the video recorder (2) can be set to a "recording" mode, in which a received television program signal supplied by the tuner (20a) is recorded, to a "playback" mode, in which a recorded television program signal is reproduced, and to further modes of operation, and having a control signal generator (73), which generates and supplies a playback control signal (V(Pb)) when the video recorder (2) is in the "playback" mode, which playback control signal together with a television program signal reproduced in the "playback" mode in the video recorder (2) can be applied to the connector (4) of the video recorder (2), from which the playback control signal (V(Pb)) can be applied to a detection device (101) of the television receiver (3) via the cable (6) and the connector (5) of the television receiver (3), which detection device is adapted to detect the playback control signal (V(Pb)), in which television receiver (3) a second reproduction mode can be started upon detection of the playback control signal (V(Pb)) to reproduce the television program signal transferred to the television receiver (3) via the cable (6), characterized in that the video recorder (2) has a time window generator (105) for generating a time window of a given time window length (T), and in that the mode selection device (65) controls the time window generator (105) in such a manner that the time window generator (105) automatically generates the time window of the given time window length (T) at least one time as a result of the initiation of the activation of at least one given mode which deviates from the "playback" mode and which can be activated by means of the mode selection device, and in that the time window generator (105) controls the control signal generator (73) in such a manner that the control signal generator (73) also generates and supplies the playback control signal (V(Pb)) if the time window generator (105) generates the time window.

2. A video recorder as claimed in Claim 1, characterized in that in response to the initiation of the activation of the "recording" mode the mode selection device (65) activates the time window generator (105) to generate the time window (Figs. 1, 2, 4, 5).

3. A video recorder as claimed in Claim 1 or 2, characterized in that there has been provided a detection device (108) which is adapted to detect the initiation a tuning operation of the tuner (20a) of the video recorder (2) to another station by means of the mode selection device (65) within the given time window length (T) of the time window generated by means of the time window generator (105) as a result of the initiation of the activation of at least one given mode of operation, and in that said detection device (108) controls the time window generator (105) in such a manner that at the instant at which the initiation of a tuning operation of the tuner (20a) of the video recorder (2) to another station is detected the time window generator (105) is reset and again generates the time window of the given time window length (T) (Figs. 1, 2, 4, 5; 7).

## Revendications

1. Magnétoscope (2) avec un syntoniseur (20a) qui peut respectivement être syntonisé sur une chaîne de plusieurs chaînes et qui, après une syntonisation sur une chaîne, délivre un signal de programme télévisé reçu, avec un dispositif d'enregistrement et de lecture (34) en vue de l'enregistrement d'un signal de programme télévisé délivré par le syntoniseur (20a) et en vue de la lecture d'un signal de programme télévisé enregistré et avec un dispositif de raccordement (4) qui peut être relié au syntoniseur (20a) pour lui amener le signal de programme télévisé reçu délivré par le syntoniseur (20a) et auquel peut être raccordée une liaison câblée (6) qui peut être raccordée à un dispositif de raccordement (5) d'un téléviseur (3) qui présente également un syntoniseur (77a) qui peut respectivement être syntonisé sur une chaîne de plusieurs chaînes et qui, après une syntonisation sur une chaîne, délivre un signal de programme télévisé reçu qui est lu dans un premier mode de fonctionnement de lecture du téléviseur (3) avec celui-ci, des signaux pouvant être transmis par l'intermédiaire de la liaison câblée (6) du magnétoscope (2) et vers le magnétoscope (2) et avec un dispositif d'activation de modes de fonctionnement (65) avec lequel un mode de fonctionnement "enregistrement " dans lequel s'effectue l'enregistrement d'un signal de programme télévisé reçu délivré par le syntoniseur (20a) et un mode de fonctionnement "lecture" dans lequel s'effectue la lecture d'un signal de programme télévisé enregistré et d'autres modes de fonctionnement peuvent être activés dans le magnétoscope (2) et avec un dispositif de production de signaux de commande (73) qui, lorsque le mode de fonctionnement "lecture" est activé dans le magnétoscope (2), produit et délivre un signal de commande de lecture V(Pb) qui peut être amené en même temps qu'un signal de programme télévisé lu dans le mode de fonctionnement " lecture" dans le magnétoscope (2) au dispositif de raccordement (4) du magnétoscope (2) depuis lequel le signal de commande de lecture V(Pb) peut être amené par l'intermédiaire de la liaison câblée (6) et du dispositif de raccordement (5) du téléviseur (3) à un dispositif de détection (101) du téléviseur (3) avec lequel le signal de commande de lecture V(Pb) peut être détecté, un deuxième mode de fonctionnement de lecture pouvant être activé en vue de la lecture du signal de programme télévisé transmis par l'intermédiaire de la liaison câblée (6) vers le téléviseur lors de la constatation du signal de commande de lecture V(Pb) dans le téléviseur (3), caractérisé en ce que le magnétoscope (2) présente un dispositif de production de fenêtre temporelle (105) en vue de la production d'une fenêtre temporelle d'une longueur de fenêtre temporelle T préalablement déterminée et que le dispositif d'activation de modes de fonctionnement (65) commande le dispositif de production de fenêtre temporelle (105) de telle sorte que le dispositif de production de fenêtre temporelle (105) produise automatiquement au moins une fois en raison du déclenchement de l'activation d'au moins un mode de fonctionnement prédéterminé à activer par le dispositif d'activation de modes de fonctionnement et différant du mode de fonctionnement « lecture » la fenêtre temporelle avec la longueur de fenêtre temporelle T préalablement déterminée et que le dispositif de production de fenêtre temporelle (105) commande le dispositif de production de signaux de commande (73) de telle sorte que le dispositif de production de signaux de commande (73) produise et délivre aussi le signal de commande de lecture V (Pb) lorsque le dispositif de production de fenêtre temporelle (105) produit la fenêtre temporelle.

2. Magnétoscope selon la revendication 1, caractérisé en ce que le dispositif d'activation de modes de fonctionnement (65) excite le dispositif de production de fenêtre temporelle (105) en vue de la production de la fenêtre temporelle en raison du déclenchement de l'activation du mode de fonctionnement « enregistrement » (Fig. 1, 2, 4, 5).

3. Magnétoscope selon l'une des revendications 1 ou 2, caractérisé en ce qu'il est prévu un dispositif de détection (108) qui permet de constater le déclenchement d'une syntonisation du syntoniseur (20a) du magnétoscope (2) sur une autre chaîne dans la longueur de la fenêtre de temps préalablement déterminée T de la fenêtre temporelle produite en raison du déclenchement de l'activation d'au moins un mode de fonctionnement préalablement déterminée du dispositif de production de fenêtre temporelle (105), déclenchement effectué à l'aide du dispositif d'activation de modes de fonctionnement (65) et que ce dispositif de détection (108) commande le dispositif de production de fenêtre temporelle (105) de telle sorte que le dispositif de production de fenêtre temporelle (105) soit réinitialisé au moment de la constatation du déclenchement d'une syntonisation du syntoniseur (20a) du magnétoscope (2) sur une autre chaîne et produise à nouveau la fenêtre temporelle avec la longueur de fenêtre temporelle préalablement déterminée (Fig. 1, 2, 4, 5 ; 7).
